# EUROPEAN PATENT APPLICATION

(11) **EP 2 966 523 A1**
(43) Date of publication of application: **13.01.2016**
(21) Application number: 14176446.4
(22) Date of filing: 10.07.2014
(51) Int. Cl.: G05B 19/418, G06Q 10/06, G06Q 10/08

(54) **Controlling a manufacturing process**

(71) Applicant: Siemens Aktiengesellschaft, 80333 München (DE)
(72) Inventor: Raviola, Alessandro, 16156 Genova (IT); Reggio, Elena, 16133 Genova (IT)
(74) Representative: Maier, Daniel Oliver

(57) **Abstract**

A method of controlling manufacturing processes in a plant via a MES system comprises the step (10) of providing the MES system with product definition information, including production-related information entities (100; 101...104) containing information on how to manufacture a product, and resource-related information entities (200, 300) containing information about resources to be used for manufacturing that product. The step of providing the MES system with product definition information includes:
- providing the MES system (10) with a single production-related information entity for manufacturing a plurality of products whose manufacturing processes share most of the process workflow and most of the resources;

and the step (10) of providing the MES system with a single production-related information entity includes:
a) storing in said single production-related entity (11), for a non-shared resource, a label defining said non-shared resource as a generic resource;
b) solving the generic resource into an actual resource (12) by creating a bind to a resource-related information entity (200, 300) at the creation of a production order for a specific product.

## Description

The invention-relates to a method and a system for controlling a manufacturing process, especially in a production facility employing a computer managed manufacturing execution system (MES).

As defined by the Manufacturing Enterprise Solutions Association (MESA International), a MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES products, under its SIMATIC® product family.

Typically, at engineering time, MES client applications are used by system engineers for customizations according to the specific manufacturing plant requirements. Instead, at runtime, MES client applications are utilized by end-users such as plant operators or line responsible personnel.

An accurate modeling of the manufacturing process is essential for both scheduling and execution and to eventually achieve a good level of operational performance in manufacturing activities.

A well known example of a model for manufacturing is found in a standard called ISA-S95. The standard ISA S95 is an extension by a batch mode of the ISA S88 standard for process control engineering in manufacturing, applicable for discrete and continual production types. It defines schemes for the individual production steps, the schemes containing rules about information exchange between different production phases required in the manufacturing execution system.

In MES systems an essential step is product definition. This means that engineers need tools to define the process driving the production of a finished good. The engineers will define the production steps, the materials, the equipment and more generally all the resources involved and required to produce a specific product. The evidence of the need of product definition is present in ISA-S95 standard.

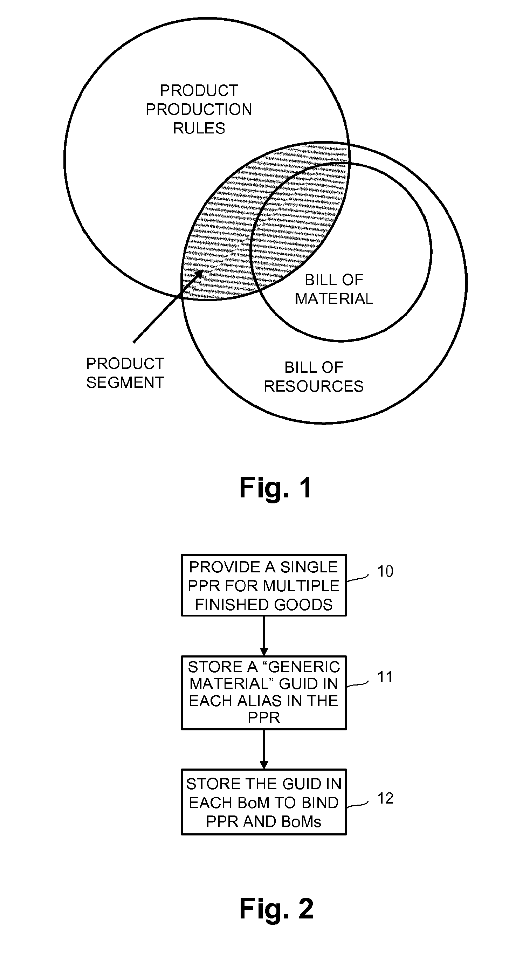

According ISA-S95 standard, and as shown in Fig. 1 that reproduces Fig. 8 of part 1 of the standard, the Product Definition Information includes three different areas of information, namely, information for scheduling or bill of resources (BoR), material information or bill of material (BoM) and product production rules (PPRs). The BoR is the list of all resources required to produce a product, including materials, personnel, equipment, energy and consumables. The BoM is the list of all materials required to produce a product showing the quantity of each required: these may be raw materials, intermediate materials, subassemblies, parts, and consumables. The PPRs are the information used to instruct a manufacturing operation how to produce a product. The overlap of a PPR and the associated BoR/BoM (dashed area in fig. 1) forms the Product Segments (PSs). Hereinafter, the PPRs and the BoRs/BoMs will be also referred to as "production-related information entities" and "resource-related information entities", respectively. In the description, the "information entities" will also be referred to in short as "entities".

At present, the Product Definition and the Product Production Rule, as defined in ISA-S95, only foresee that a PPR produces a single product, and different product definitions are required for the production of even quite similar products, whose production shares most manufacturing steps and most materials.

This approach (one product definition for each product without regard of the product) clearly results, within MES systems, in a proliferation of product definitions, often with very little differences, and hence in increase of the complexity of the MES system. The high complexity makes errors easier, introduces inefficiency and results in poor performance and high cost of maintenance.

Niches where proliferation of product definitions may happen are, for example, the pharmaceutical industry or the food and beverage industry. For example, let us consider the finished goods "Vitamin C pills" and "Vitamin D pills": they have similar processes and similar ingredients except for some materials (the active principle is different) and some process parameter (different mixing times for example).

Similarly, in food industry, in producing Vanilla Ice Creams and Chocolate Ice Creams, substantially everything will be shared, apart from the ingredient determining the flavor (Vanilla or Chocolate) and possibly some optional ingredient allowing production of some variants of a same ice cream.

It is an object of the invention is to provide a method of controlling a manufacturing process, which allows avoiding the proliferation of product definitions (and hence of product production rules) when the engineer faces similar processes that share most of the resources and of the process workflow to produce different finished goods.

The aforementioned object is achieved by a method and a system, comprising the step of providing the MES system with product definition information including production-related information entities containing information on how to manufacture a product, and resource-related information entities containing information about resources to be used for manufacturing that product. The step of providing the MES system with product definition information includes providing the MES system with a single production-related information entity for manufacturing a plurality of products whose manufacturing processes share most of the process workflow and most of the resources, and the step of providing the MES system with a single production-related information entity in turn includes:
a) storing in said single production-related information entity, for a non-shared resource, a label defining said non-shared resource as a generic resource;
b) solving the generic resource into an actual resource by creating a bind to a resource-related information entity at the creation of a production order for a specific product.

In invention embodiments, the bind between a production-related entity and a resource-related entity is built by storing said label into each resource-related entity to which said single production-related entity has reference for the production of each specific good.

In invention embodiments, the label is a globally unique identifier (GUID).

In invention embodiments, the resources are materials to be used in the production.

In invention embodiments, the product definition information may be preferably taken from the ISA-S95 standard, and the production-related entity and the resource related entities are a product production rule and bills of material, respectively.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Thus, embodiments of the invention provide a single product production rule for a plurality of finished goods to be produced, and said single production rule will have reference to the specific bill of material when creating a specific production order.

Thanks to the use of a simple label, such as a GUID, stored in the PPR and in the BoMs and identifying a generic, non-shared material, solution of the generic material into true materials is easily implemented and does not add complexity to the system.

The invention will now be described in preferred but not exclusive embodiments with reference to the accompanying drawings, wherein:
Fig. 1 shows the product definition information according to ISA-S95 standard;
Fig. 2 is a flow chart of the method of the invention; and
Fig. 3 shows the single PPR and the BoMs of an exemplary application of the invention.

According to the present invention, a manufacturing process of a plant is controlled via a MES system. The MES system is provided with product definition information like that shown in Fig. 1. The product definition information includes production-related information entities, in particular at least a PPR with one or more PSs associated therewith, and resource-related information entities, in particular a BoM for each product, to which the PPR has reference.

As mentioned before, in MES systems conforming to ISA-S95 standard, there is a one-to-one correspondence between a product definition and a product. To solve the problems mentioned above inherent in this approach, according to the invention the concept of PPR multiple final material is introduced, i.e. a PPR can define the process and the resources to produce a set of finished goods (e.g. Vitamin C or Vitamin D; Vanilla Ice Cream or Chocolate Ice Cream...) instead of a single good.

Thus, referring to Fig. 2, a first step 10 of the method of the invention is creating a single PPR for multiple finished goods.

The major issue related to the problem of having the same PPR working to produce different finished goods is that some of the resources are different. Referring to the above mentioned examples Vitamin C/D, Vanilla/Chocolate Ice Cream, the respective conventional product definitions share most of the process in terms of steps to be executed and share also most of the raw materials involved. However they do not share every kind of resources defined in the PPRs: in fact, in the case of the vitamins, different active principles are required; in the case of the ice creams, at least different flavors are to be used.

To attain the single PPR for different finished goods, generic materials that will be referred to as "Aliases" are stored among the PPR resources (step 11). The "Aliases" are then solved into true materials by binding them with a BoM (step 12) when the production definition must be used to really produce the finished good desired by the user, i.e. when the PPR becomes a Production Order for a specific finished good.

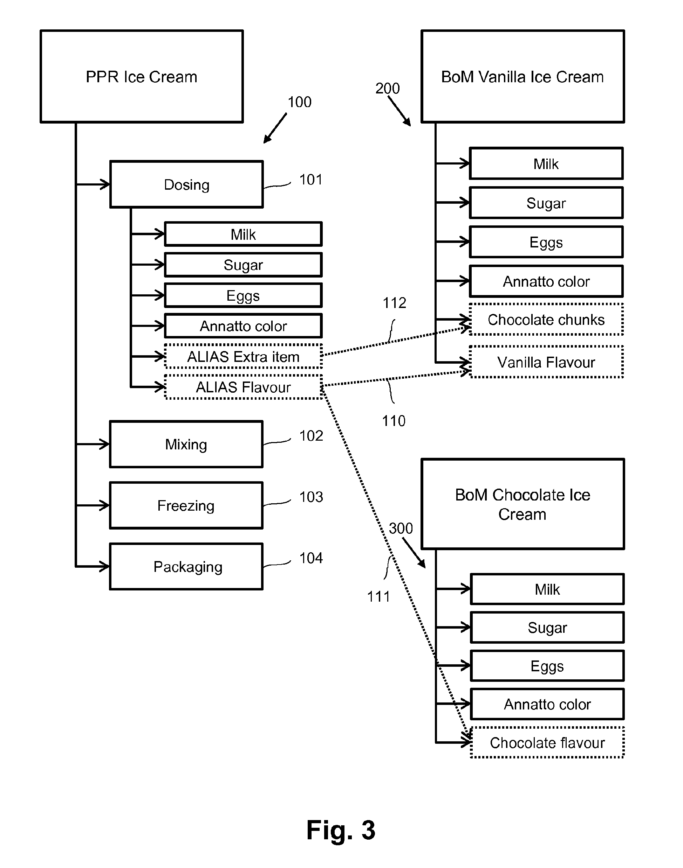

An exemplary application of the invention to the production of vanilla ice cream and chocolate ice cream is illustrated in Fig. 3.

On the left side a single PPR 100 is shown, containing production information for generic ice creams. On the right side two different BoMs 200, 300 are present, for vanilla ice cream and chocolate ice cream production, respectively.

PPR 100 includes a number of product segments, for instance dosing 101, mixing 102, freezing 103 and packaging 104. Dosing 101 involves use of some fixed materials like sugar, milk and eggs and a colorant (e.g. annatto color), all of which are used in the same amount whichever ice cream is to be produced. Besides, that segment involves use of other materials (the Aliases defined above), which are specific for the specific ice cream kind and which will not be defined a priori in the PPR. In the example, the Aliases are the flavor and possible optional ingredients, referred to as extra items (in the example, chocolate chunks for the vanilla ice cream). The PPR aliases are shown by dotted line boxes.

Correspondingly, both BoMs 200, 300 have the fixed materials to be used in both products, plus the specific materials for the specific product, namely the vanilla and chocolate flavors, and the extra item for the vanilla ice cream. The chocolate chunks and the vanilla flavor in BoM 200 and the chocolate flavor in BoM 300 are the aliases in the BoMs, also shown by dotted-line boxes. The links between the Aliases in the PPR and the BoMs are shown by dotted lines 110, 111 for the flavor and 112 for the extra item.

In order to allow the solution of the Alias materials into the true materials, a configuration step is performed by introducing a label, e.g. a GUID (Global Unique IDentifier) or a string of characters, into the concerned product segment(s) instead of a reference to an actual material in the PPR. Correspondingly, the same GUID or string of characters is also introduced into the concerned items of the BoMs.

When a production order comes from an ERP (Enterprise Resource Planning) system, it will typically have some information items, including in particular the finished good wanted by a customer, so that the PPR will access the proper BoM and the label (s) allow (s) reading the actual material information from the BoM item(s).

For instance, considering for the sake of simplicity only the flavor alias in PPR 100, the PPR could be as follows

```
 PPR_ICE_CREAM
    |_PS_DOSING
          |_Material: Milk, 10 liters, description= "milk to
           be used for the ice cream"
          |_...
          |_Special Material (ALIAS Flavor); no description;
           ALIAS GUID = "AFED123DERF"
    |_PS_MIXING
    |_...
```

As shown, only the GUID is provided for the Alias, without further information and description.

In turn, the BoMs could be as follows:

```
 BOM_VANILLA_ICE_CREAM
    |_...
    |_VANILLA: description = "vanilla for ice cream, 1kg;
      ALIAS GUID = "AFED123DERF"
      BOM_CHOCOLATE_ICE_CREAM
    |_...
    |_CHOCOLATE: description = "chocolate for ice cream",
      1kg; ALIAS GUID = "AFED123DERF"
```

The GUID in the product segment item and in the associated BOM item implements link 110 or 111, respectively.

In similar way, a GUID will be stored also in the extra item field in PPR 100 and in item "chocolate chunks" of BoM 200 to implement link 112.

With embodiments of the present solution, the ISA-S95 standard can be extended by enabling product production rules defining several products.

In addition to the embodiments of the present invention described above, the skilled persons in the art will be able to arrive at a variety of other arrangements and steps which, if not explicitly described in this document, nevertheless fall within the scope of the appended claims. In particular, the "aliases" could be resources other than the materials.

## Claims

1. A method of controlling manufacturing processes in a plant via a MES system, comprising the step (10) of providing the MES system with product definition information including production-related information entities (100; 101...104) containing information on how to manufacture a product, and resource-related information entities (200, 300) containing information about resources to be used for manufacturing that product,
the method being **characterized in that** the step of providing the MES system with product definition information includes providing the MES system (10) with a single production-related information entity for manufacturing a plurality of products whose manufacturing processes share most of a process workflow and most of the resources;
and **in that** the step of providing the MES system with a single production-related information entity includes:
a) storing in said single production-related entity (11), for a non-shared resource, a label defining said non-shared resource as a generic resource;
b) solving the generic resource into an actual resource (12) by creating a bind to a resource-related information entity (200, 300) at the creation of a production order for a specific product.

2. The method according to claim 1, wherein said step of solving the generic resource into an actual material (12) includes storing said label into each resource-related entity (200, 300) to which said single production-related entity (100) has reference for the production of each specific product.

3. The method according to claim 1 or 2, wherein said label is a globally unique identifier.

4. The method according to any of claims 1 to 3, wherein said resources are materials to be used in manufacturing the product.

5. The method according to any of claims 1 to 4, wherein said production-related information entities and said resource-related information entities belong to a product definition information according to the ISA-S95 standard and are product production rule and bills of material, respectively.

6. A system for controlling a manufacturing process in a plant via a MES system, comprising means for providing the MES system with product definition information including production-related information entities (100; 101...104) containing information on how to manufacture a product, and resource-related information entities (200, 300) containing information about resources to be used for manufacturing that product, the system being **characterized in that** said providing means are arranged to provide the MES system with a single production-related entity (100) for manufacturing a plurality of products whose manufacturing processes share most of a process workflow and most of the resources, and include:
a) means for storing in said single production-related entity (100), for a non-shared resource, a label defining said non-shared resource as a generic resource;
b) means for solving the generic resource into an actual material by creating a bind to a resource-related entity (200, 300) at the creation of a production order for a specific product.

7. A computer program product for performing steps of the method according to any of claims 1 to 6.
